# EUROPEAN PATENT SPECIFICATION

(11) **EP 2 642 577 B1**
(45) Date of publication and mention of the grant of the patent: **03.08.2016**
(21) Application number: 12189886.0
(22) Date of filing: 25.10.2012
(51) Int. Cl.: H01M 10/0525, H01M 4/505, H01M 4/525, H01M 4/36

(54) **Positive electrode active material for lithium ion secondary battery and lithium ion secondary battery including positive electrode active material**
Positives, elektrodenaktives Material für Lithium-Ionen-Sekundärbatterie und Lithium-Ionen-Sekundärbatterie mit postivem elektrodenaktiven Material
Matériau actif d'électrode positive pour batterie secondaire au lithium ionique et batterie secondaire au lithium ionique comprenant un matériau actif d'électrode positive

(30) Priority: 22.03.2012 KR 20120029508
(43) Date of publication of application: 25.09.2013
(73) Proprietor: Samsung SDI Co., Ltd., Yongin-si, Gyeonggi-do (KR)
(72) Inventor: Lee, Mi Sun, 336-841 Chungcheongnam-Do (KR); Yun, Pil Sang, 336-841 Chungcheongnam-Do (KR); Lee, Doo Kyun, 336-841 Chungcheongnam-Do (KR); Jo, Sung Nim, 336-841 Chungcheongnam-Do (KR); Cho, Yun Ju, 336-841 Chungcheongnam-Do (KR); Choi, Shin Jung, 336-841 Chungcheongnam-Do (KR); Kim, Se Won, 336-841 Chungcheongnam-Do (KR); Lee, Ha Yeon, 336-841 Chungcheongnam-Do (KR); Cho, Hae In, 336-841 Chungcheongnam-Do (KR)
(74) Representative: Gulde & Partner

(56) References cited:
- EP-A2- 1 193 782
- WO-A2-2011/122877
- US-A1- 2006 051 673
- US-A1- 2010 248 038
- SUN-HO KANG ET AL: "Enhancing the rate capability of high capacity xLi2MnO3.(1-x)LiMO2 (M=Mn, Ni, Co) electrodes by Li-Ni-PO4 treatment", ELECTROCHEMISTRY COMMUNICATIONS, vol. 11, no. 4, 1 April 2009 (2009-04-01), pages 748-751, XP055045786, ISSN: 1388-2481, DOI: 10.1016/j.elecom.2009.01.025
- BONG-SOO JIN ET AL: "Electrochemical properties of x Li 2 MnO 3 .(1- x )LiMn 0.33 Ni 0.33 Co 0.33 O 2 ( x <0.5) from metal nitrates as starting materials", PHYSICA SCRIPTA, vol. T139, 1 May 2010 (2010-05-01), page 014044, XP055045792, ISSN: 0031-8949, DOI: 10.1088/0031-8949/2010/T139/014044

## Description

The present invention relates to a positive electrode active material for a lithium ion secondary battery and a lithium ion secondary battery including the same, and more particularly, to a positive electrode active material for a lithium ion secondary battery including layer-structured lithium metal oxide and one or more selected from the group consisting of spinel-structured lithium metal oxides and olivine-structured lithium metal oxides, and a lithium ion secondary battery including the positive electrode active material.

### Description of the Related Art

Recently, in line with the requirements for miniaturization and lightness of portable electronic devices such as mobile phones, notebooks, and personal digital assistants (PDAs), improvements in characteristics, such as high capacity, long lifetime, and high safety, of lithium (Li) ion secondary batteries used as power sources of these electronic devices are required. Also, interests in automotive electrification have grown and a lithium ion secondary battery as a power source of electric vehicles has emerged as a powerful alternative.

Currently, an industrially most used positive electrode active material in lithium ion secondary batteries is layer-structured LiCoO₂. The layer-structured LiCoO₂ has a high market share because lifetime characteristics are excellent and manufacturing is easy. However, high price of cobalt (Co) used as a raw material of transition metal may serve as a cause of increasing the price of secondary battery.

Recently, layer-structured LiCoO₂ becomes replaced by Li(NiCoMn)O₂ (NCM)-based materials having a low cobalt content and high capacity, as an application range of lithium ion secondary battery is extended from small electronic devices to electric vehicles and power storage.

In US 2006/0051673 an activated electrode for non-aqueous electrochemical cells is disclosed. A lithium metal oxide is used which the Li₂MnO₃ and LiMn_{2-y}M_{y}O₄ components have a layered and spinel-type structures.

A cathode for a secondary battery is disclosed in US 2012/0288764. The cathode includes a combination of one or more compounds of xLi₂MO₃·(1-x)LiM'O₂ and (1-u)LiFePO₄·uC for long lifespan and excellent safety.

In the article "Enhancing the rate capability of high capacity xLi₂MnO₃·(1-*x*)LiMO₂ (M = Mn, Ni, Co) electrodes by Li-Ni-PO₄ treatment" by Sun-Ho Kang et al. (Electrochemistry Communications 11 (2009) 748-751) it has been found that the rate capability can be enhanced by stabilizing the electrode surface by reaction with Li-Ni-PO₄ solution.

A spinel-structured positive electrode active material and an olivine-structured positive electrode active material may have a relatively stable structure in comparison to that of a layer-structured positive electrode active material. However, the spinel-structured and olivine-structured positive electrode active materials may have capacities lower than those of NCM-based materials.

### Summary of Invention

An aspect of the present invention provides a positive electrode active material having improved stability by using a high-capacity positive electrode active material, xLiMO₂·(1-x)Li₂MnO₃ lithium metal oxide, and a high-stability positive electrode active material, an olivine-structured lithium metal phosphate and a spinel-structured lithium metal oxide, and a lithium ion secondary battery including the positive electrode active material. According to one aspect of the present invention, there is provided a positive electrode active material for a lithium ion secondary battery includes layer-structured lithium metal oxide expressed by the following Chemical Formula (1); and at least one selected from the group consisting of spinel-structured lithium metal oxides and olivine-structured lithium metal phosphates,

xLiMO₂·(1-x)Li₂MnO₃ (1)

where M is one or more selected from the group consisting of nickel (Ni), cobalt (Co), and manganese (Mn), and 0<x<1.

The spinel-structured lithium metal oxide may be LiMn₂O₄.

The olivine-structured lithium metal phosphate may be one or more selected from the group consisting of LiFePO₄, LiMnPO₄, and LiFeₓMn₍₁₋ₓ₎PO₄(0<x<1).

A total content of the spinel-structured lithium metal oxide and the olivine-structured lithium metal phosphate may be in a range of 10 wt% to 30 wt% of the entire positive electrode active material.

According to another embodiment, a positive electrode includes the positive electrode active material of the present disclosure.

According to another embodiment, a lithium ion secondary battery includes the positive electrode including the positive electrode active material of the present disclosure, an electrolyte, and a negative electrode.

### Brief Description of the Drawings

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:

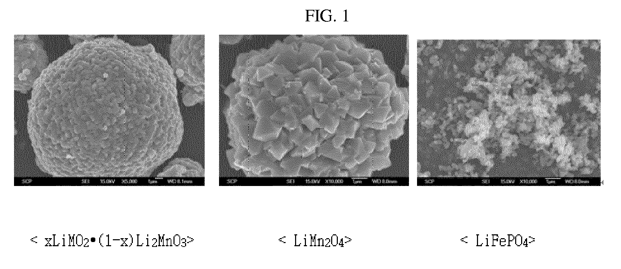

FIG. 1 shows scanning electron microscope (SEM) images of lithium metal oxides of the present invention.

### Detailed Description

Korean Patent Application No. 10-2012-0029508 filed on March 22, 2012, in the Korean Intellectual Property Office, and entitled: "Positive Electrode Active Material for Lithium Ion Secondary Battery and Lithium Ion Secondary Battery Including the Same" is referred to.

Embodiments relate to a positive electrode active material for a lithium ion secondary battery including layer-structured lithium metal oxide expressed by the following Chemical Formula 1:

xLiMO₂(1-x)Li₂MnO₃ (1)

where M is one or more selected from the group consisting of nickel (Ni), cobalt (Co), and manganese (Mn), and 0<x<1,
and further including at least one selected from the group consisting of spinel-structured lithium metal oxides and olivine-structured lithium metal phosphates.

Lithium metal oxide is mainly used for a positive electrode active material as a positive electrode material of a lithium ion secondary battery, and may be broadly classified as a layer type, a spinel type, and an olivine type according to the structure thereof. Layer-structured oxide may be expressed by a chemical formula of LiMO₂ (M = Co, Ni, Mn, etc.) and has a form, in which two MO₂ layers exist in a single crystal structure and lithium ions exist between each MO₂ layer. The layer-type positive electrode active material has a limitation in that electrode capacity may decrease because the structure thereof may be changed according to the extraction of lithium ions.

In the present disclosure, Li₂MnO₃ is used for stabilizing the foregoing layer structure. Since Mn in Li₂MnO₃ exists as a stable tetravalent cation and has a high activation barrier for diffusion, Mn contributes to stabilize the layer structure.

Since the lithium metal oxide expressed by Chemical Formula 1 of the present disclosure has a sufficient amount of lithium, the lithium metal oxide may exhibit high capacity and may be used at a high voltage as compared to a typical lithium nickel cobalt manganese oxide (NCM)-based positive electrode active material, and thus, a highly safe lithium ion secondary battery may be prepared.

The spinel-structured lithium metal oxide may have a composition of LiM₂O₄ (M = titanium (Ti), vanadium (V), Mn, or Ni) and have a cubic crystal structure. Since the spinel-structured lithium metal oxide has a three-dimensional crystal structure, a movement path of lithium ions is short and ionic conductivity is high, and since there is no destruction of the overall structure thereof during the extraction of lithium ions, the spinel-structured lithium metal oxide is very stable. In the embodiments, LiM₂O₄ may be used as the spinel-structured lithium metal oxide. The reason for this is that manganese is more abundant and environmentally friendly than cobalt and has excellent thermal stability for a positive electrode active material in relation to the safety of lithium ion secondary battery.

Since the olivine-structured lithium metal phosphate has a very stable structure, there is virtually no decrease in capacity and chemical stability thereof is also high. In the embodiments, one or more selected from the group consisting of LiFePO₄, LiMnPO₄, and LiFeₓMn(₁₋ₓ)PO₄ (0<x<1) may be used as the olivine-structured lithium metal phosphate

Therefore, the positive electrode active material of the present disclosure may improve lifetime characteristics of lithium ion secondary battery and provide a positive electrode active material having improved stability by using high-stability spinel-structured lithium metal oxide and olivine-structured lithium metal oxide as well as high-capacity xLiMO₂-(1-x)Li₂MnO₃ lithium metal oxide.

In the embodiments, a total content of the spinel-structured lithium metal oxide and the olivine-structured lithium metal oxide may be in a range of 10 wt% to 30 wt% of the entire positive electrode active material. In the case that the total content thereof is less than 10 wt% or greater than 30 wt%, stability and lifetime characteristics may decrease.

The positive electrode active material according to the embodiments may be obtained through a heat treatment after uniformly mixing lithium metal oxide powder of Chemical Formula 1 with spinel-structured lithium metal oxide powder and/or olivine-structured lithium metal phosphate powder. The mixing may be performed by using various methods.

When the mixing is performed by using a Thinky Mixer, the mixing is performed at 1000 rpm to 2000 rpm for 1 minute and the method is repeated for three times. Also, the mixing may be performed for about 30 minutes to one hour by using a mortar and a ball mill may be used as another method.

The embodiment provides a lithium ion secondary battery including a positive electrode including the positive electrode active material of the present disclosure, a negative electrode, and an electrolyte.

The lithium ion secondary battery may be prepared by introducing the electrolyte between the positive electrode and the negative electrode according to a typical method well known in the art.

An electrode used in a lithium ion secondary battery is typically prepared in such a manner that an active material, a binder, and a conductive agent are mixed with a solvent to form a slurry, and an electrode collector is coated with the slurry, dried, and pressed.

In the lithium ion secondary battery of the present disclosure, natural graphite, artificial graphite, carbon fibers, cokes, carbon black, carbon nanotubes, fullerenes, active carbon, lithium metal, or a lithium alloy may be used as a negative electrode active material, but the present disclosure is not limited thereto.

The binder functions to bond the active material and the conductive agent to be adhered to the electrode collector. A binder typically used in a lithium ion secondary battery, such as polyvinylidene fluoride, polypropylene, carboxymethyl cellulose, starch, hydroxypropyl cellulose, polyvinylpyrrolidone, tetrafluoroethylene, polyethylene, an ethylene-propylene-diene polymer (EPDM), polyvinyl alcohol, a styrene-butadiene rubber, and a fluoro rubber, may be used.

The conductive agent is not particularly limited so long as it does not cause chemical changes in the battery as well as having conductivity. For example, artificial graphite, natural graphite, Denka black, acetylene black, Ketjen black, channel black, lamp black, thermal black, conductive fibers such as carbon fibers or metal fibers, conductive metal oxides such as titanium oxide, and metal powders such as aluminum powder and nickel powder, may be used.

The electrolyte acts as a medium for transferring lithium ions in the positive electrode and the negative electrode, and an electrolyte having a lithium salt dissolved in an organic solvent may be used. Examples of the organic solvent may be ethylene carbonate, propylene carbonate, dimethyl carbonate, diethyl carbonate, methylpropyl carbonate, ethylpropyl carbonate, butylene carbonate, and acetonitrile, and the organic solvent may be used alone or in combination thereof. The lithium salt acts as a source of lithium ions and for example, a lithium salt typically used in an electrolyte of a lithium ion secondary battery, such as LiPF₆, LiBF₄, LiSbF₆, LiAsF₆, LiClO₄, LiN(C₂F₅SO₂)₂, LiN(CF₃SO₂)₂, CF₃SO₃Li, and LiC(CF₃SO₂)₃, may be used.

The lithium ion secondary battery of the present disclosure may prevent a short circuit between two electrodes by including a separator between the positive electrode and the negative electrode. A separator typically used in a lithium ion secondary battery, for example, a single olefin, such as polyethylene (PE) and polypropylene (PP), or an olefin composite, polyamide (PA), poly(acrylonitrile) (PAN), poly(ethylene oxide) (PEO), poly(propylene oxide) (PPO), poly(ethylene glycol) diacrylate (PEGA), polytetrafluoroethylene (PTFE), polyvinylidene fluoride (PVdF), and polyvinyl chloride (PVC), may be used.

Hereinafter, the present disclosure will be described in more detail according to the following examples.

### Examples

### 2. (Referece Example 1)

10 wt% of LiFePO₄ and 90 wt% of 0.17Li₂MnO₃-0.83LiNi_{0.58}Co_{0.20}Mn_{0.23}O₂ were weighed and ball milled at 100 rpm.

### (Reference Example 2)

20 wt% of LiFePO₄ and 80 wt% of 0.17Li₂MnO₃-0.83LiNi_{0.58}Co_{0.20}Mn_{0.23}O₂ were weighed and ball milled at 100 rpm.

### (Reference Example 3)

30 wt% of LiFePO₄ and 70 wt% of 0.17Li₂MnO₃-0.83LiNi_{0.58}Co_{0.20}Mn_{0.23}O₂ were weighed and ball milled at 100 rpm.

### (Reference Example 4)

10 wt% of LiMn₂O₄ and 90 wt% of 0.17Li₂MnO₃-0.83LiNi_{0.58}Co_{0.20}Mn_{0.23}O₂ were weighed and mixed by using a Thinky Mixer at 1000 rpm to 2000 rpm for 1 minute, and the mixing was repeated for three times.

### (Reference Example 5)

20 wt% of LiMn₂O₄ and 80 wt% of 0.17Li₂MnO₃-0.83LiNi_{0.58}Co_{0.20}Mn_{0.23}O₂ were weighed and mixed by using a Thinky Mixer at 1000 rpm to 2000 rpm for 1 minute, and the mixing was repeated for three times.

### (Example 6)

10 wt% of LiFePO₄, 20 wt% of LiMn₂O₄ and 70 wt% of 0.17Li₂MnO₃-0.83LiNi_{0.58}Co_{0.20}Mn_{0.23}O₂ were weighed and mixed by using a Thinky Mixer at 1000 rpm to 2000 rpm for 1 minute, and the mixing was repeated for three times.

### (Example 7)

20 wt% of LiFePO₄, 10 wt% of LiMn₂O₄ and 70 wt% of 0.17Li₂MnO₃-0.83LiNi_{0.58}Co_{0.20}Mn_{0.23}O₂ were weighed and mixed by using a Thinky Mixer at 1000 rpm to 2000 rpm for 1 minute, and the mixing was repeated for three times.

### (Experimental Example 1)

Each positive electrode active material obtained from the forgoing Examples, a Denka black conductive agent, and a polyvinylidene fluoride (PVDF) binder were mixed at a weight ratio of 92:4:4 in N-methyl-2-pyrrolidone (NMP) to form slurries. The slurries were casted on thin aluminum foils, and the thin aluminum foils were dried in an oven at 80°C for 1 hour and in a vacuum oven at 120°C for 2 hours, and then pressed to prepare positive electrodes. Each coin cell was prepared by using lithium metal as a negative electrode and a 1.3M LiPF₆ ethylene carbonate (EC)/dimethylene carbonate (DMC)/EC (=5:3:2) solution as an electrolyte.

The batteries thus prepared were charged to 4.5 V, and then voltages of the batteries in a fully charged state were measured and the batteries were disassembled within a short period of time so as not to allow the voltages to be decreased to 4.3 V or less. Positive electrodes of the disassembled batteries were cleaned with the electrolyte and dried in an oven at 100°C for 1 hour, and then positive electrode active materials were collected. The collected positive electrode active materials and electrolytes were put in cans for differential scanning calorimeter y (DSC) and assembled, and thermal stabilities were then measured. The results thereof are presented in Table 1.

### (Experimental Example 2)

50 cycles of charge and discharge were repeated for batteries prepared in the same manner as Experimental Example 1 to measure capacity retention ratios. The results thereof are presented in Table 1.

### (Comparative Example)

0.8Li₂MnO₃-0.2LiNiCoMnO₂ was used as a positive electrode active material to measure for a DSC calorific value and a capacity retention ratio in the same manner as described in the foregoing Experimental Examples.

**[Table 1]**

| Category | LiFePO₄ | 0.17Li₂MnO₃-0.83LiNi_{0.58}CO_{0.20}Mn_{0.23}O₂ | LiMn₂O₄ | DSC calorific value (J/g) | Discharge capacity retention ratio after 50 cycles |
|---|---|---|---|---|---|
| Ref. Example 1 | 10 | 90 | - | 1000 | 90% |
| Ref. Example 2 | 20 | 80 | - | 970 | 93% |
| Ref. Example 3 | 30 | 70 | - | 900 | 97% |
| Ref. Example 4 | - | 90 | 10 | 1200 | 80% |
| Ref. Example 5 | - | 80 | 20 | 1150 | 80% |
| Example 6 | 10 | 70 | 20 | 1100 | 83% |
| Example 7 | 20 | 70 | 10 | 1050 | 88% |
| Comparative Example | - | 100 | - | 1244 | 76% |

A positive electrode active material according to the present disclosure may provide a high-capacity and stable lithium ion secondary battery having improved thermal stability and capacity retention ratio.

## Claims

1. A positive electrode active material for a lithium ion secondary battery comprising:
layer-structured lithium metal oxide expressed by the following Chemical Formula (1):
xLiMO₂·(1-x)Li₂MnO₃ (1)
where M is one or more selected from the group consisting of nickel (Ni), cobalt (Co), and manganese (Mn), and 0<x<1;
spinel-structured lithium metal oxides and
olivine-structured lithium metal phosphates.

2. The positive electrode active material for a lithium ion secondary battery of claim 1, wherein the spinel-structured lithium metal oxide is LiMn₂O₄.

3. The positive electrode active material for a lithium ion secondary battery of claim 1, wherein the olivine-structured lithium metal phosphate is one or more selected from the group consisting of LiFePO₄, LiMnPO₄, and LiFeₓMn₍₁₋ₓ₎PO₄ (0<x<1).

4. The positive electrode active material for a lithium ion secondary battery of one of the preceding claims, wherein a total content of the spinel-structured lithium metal oxide and the olivine-structured lithium metal phosphate is in a range of 10 wt% to 30 wt% of the entire positive electrode active material.

5. A positive electrode comprising the positive electrode active material of any one of claims 1 to 4.

6. A lithium ion secondary battery comprising the positive electrode comprising the positive electrode active material of any one of claims 1 to 4, an electrolyte, and a negative electrode.

## Patentansprüche

1. Positives, elektrodenaktives Material für eine Lithium-Ionen-Sekundärbatterie, aufweisend:
Schicht-strukturiertes Lithium-Metalloxid, das durch die folgende chemische Formel (1) ausgedrückt wird:
xLiMO₂·(1-x)Li₂MnO₃ (1),
wobei M eines oder mehrere ausgewählt aus der Gruppe bestehend aus Nickel (Ni), Cobalt (Co) und Mangan (Mn) ist und 0<x<1;
Spinell-strukturierte Lithiummetalloxide; und
Olivin-strukturierte Lithiummetallphosphate.

2. Positives, elektrodenaktives Material für eine Lithium-Ionen-Sekundärbatterie nach Anspruch 1, wobei das Spinell-strukturierte Lithiummetalloxid LiMn₂O₄ ist.

3. Positives, elektrodenaktives Material für eine Lithium-Ionen-Sekundärbatterie nach Anspruch 1, wobei das Olivin-strukturierte Lithiummetallphosphat eines oder mehrere ausgewählt aus der Gruppe bestehend aus LiFePO₄, LiMnPO₄ und LiFeₓMn(₁₋ₓ)PO₄ ist (0<x<1).

4. Positives, elektrodenaktives Material für eine Lithium-Ionen-Sekundärbatterie nach einem der vorhergehenden Ansprüche, wobei ein Gesamtgehalt des Spinell-strukturierten Lithiummetalloxids und des Olivin-strukturierten Lithiummetallphosphats in einem Bereich von 10 Gew.-% bis 30 Gew.-% des gesamten positiven, elektrodenaktiven Materials liegt.

5. Positive Elektrode, aufweisend das positive, elektrodenaktive Material nach einem der Ansprüche 1 bis 4.

6. Lithium-Ionen-Sekundärbatterie, aufweisend die positive Elektrode, die das positive, elektrodenaktive Material nach einem der Ansprüche 1 bis 4 aufweist, einen Elektrolyt und eine negative Elektrode.

## Revendications

1. Matière active d'électrode positive pour une batterie secondaire à ions lithium, comprenant :
un oxyde métallique de lithium structuré en couches représenté par la formule (1) chimique suivante :
xLiMO₂ . (1-x)Li₂MnO₃ (1)
dans laquelle M représente un ou plusieurs éléments choisis dans le groupe consistant en le nickel (Ni), le cobalt (Co) et le manganèse (Mn) et 0<x<1 ;
des oxydes métalliques de lithium à structure de spinelle ; et
des phosphates métalliques de lithium à structure d'olivine ;

2. Matière active d'électrode positive pour une batterie secondaire à ions lithium suivant la revendication 1, dans laquelle l'oxyde métallique de lithium à structure de spinelle est LiMn₂O₄.

3. Matière active d'électrode positive pour une batterie secondaire à ions lithium suivant la revendication 1, dans laquelle le phosphate métallique de lithium à structure d'olivine consiste en un ou plusieurs phosphates choisis dans le groupe consistant en LiFePO₄, LiMnPO₄ et LiFeₓMn (₁₋ₓ) PO₄ (0<x<1).

4. Matière active d'électrode positive pour une batterie secondaire à ions lithium suivant l'une des revendications précédentes, dans laquelle la quantité totale de l'oxyde métallique de lithium à structure de spinelle et du phosphate métallique de lithium à structure d'olivine est comprise dans l'intervalle de 10 % en poids à 30 % en poids de la matière active d'électrode positive totale.

5. Electrode positive comprenant la matière active d'électrode positive de l'une quelconque des revendications 1 à 4.

6. Batterie secondaire à ions lithium comprenant l'électrode positive qui comprend la matière active d'électrode positive de l'une quelconque des revendications 1 à 4, un électrolyte, et une électrode négative.
